# EUROPEAN PATENT APPLICATION

(11) **EP 3 131 315 A1**
(43) Date of publication of application: **15.02.2017**
(21) Application number: 16183049.2
(22) Date of filing: 05.08.2016
(51) Int. Cl.: H04W 4/02, H04W 4/00

(54) **WORKING METHOD AND WORKING DEVICE OF INTELLIGENT ELECTRIC APPARATUS**

(30) Priority: 13.08.2015 CN 201510498238
(71) Applicant: Xiaomi Inc., Beijing 100085 (CN)
(72) Inventor: HOU, Enxing, Beijing 100085 (CN); CHEN, Hong, Beijing 100085 (CN); MENG, Deguo, Beijing 100085 (CN)
(74) Representative: Hughes, Andrea Michelle

(57) **Abstract**

The present disclosure relates to a working method and device of an intelligent electric apparatus. The method includes: acquiring (S101, S403, S601) a message broadcasted by a smart wearable device; judging (S102, S404, S602) whether the smart wearable device is a default smart wearable device in accordance with the message; and controlling (S103, S406, S604) an operating mode of the intelligent electric apparatus in accordance with a preset parameter if the smart wearable device is determined as the default smart wearable device, the preset parameter including a parameter reflecting a distance between the smart wearable device and the intelligent electric apparatus.

## Description

### TECHNICAL FIELD

The present disclosure generally relates to the field of smart home technology, and more particularly, to a working method and device of an intelligent electric apparatus.

### BACKGROUND

At present, the smart home reflects instrumentation influenced by interconnection. The smart home provides various functions and means, such as household appliances control, illumination control, telephone remote control, indoor and outdoor remote control, burglar alarm, environment monitoring, HVAC control, infrared transponding and programmable timing control, by means of connecting various devices (such as an air conditioner, an audio-video device, an illuminating system, a curtain controller, a security and protection system, a digital cinema system, a video server, a videos system, a network household appliance) in the home together via the internet of things. As compared with conventional home, the smart home not only has a traditional resident function, but also has functions like building, network communication, information household appliances and facility automation, thus providing an interaction function of omni-directional information.

### SUMMARY

Embodiments of the present disclosure provide a working method of an intelligent electric apparatus and a working device of an intelligent electric apparatus. The technical solutions are shown as below.

According to a first aspect of embodiments of the present disclosure, there is provided a working method of an intelligent electric apparatus, including:
acquiring a message broadcasted by a smart wearable device;
judging whether the smart wearable device is a default smart wearable device in accordance with the message; and
controlling an operating mode of the intelligent electric apparatus in accordance with a preset parameter if the smart wearable device is determined as the default smart wearable device, the preset parameter including a parameter reflecting a distance between the smart wearable device and the intelligent electric apparatus.

In an embodiment, judging whether the smart wearable device is the default smart wearable device in accordance with the message may include:
acquiring an identification of the smart wearable device from the message;
judging whether the identification is a first device identification preset in a terminal for controlling the intelligent electric apparatus; or judging whether the identification is a second device identification bounded to the intelligent electric apparatus; or judging whether the identification is both a first device identification preset in a terminal for controlling the intelligent electric apparatus and a second device identification bounded to the intelligent electric apparatus;
determining the smart wearable device is the default smart wearable device if a judgment result is positive; and
determining the smart wearable device is not the default smart wearable device if the judgment result is negative.

In an embodiment, the identification of the smart wearable device may include a hardware address of the smart wearable device or a unique name of the smart wearable device.

In an embodiment, the preset parameter may include any one or more of the distance between the smart wearable device and the intelligent electric apparatus and a signal intensity of the message.

In an embodiment, prior to controlling the operating mode of the intelligent electric apparatus in accordance with the preset parameter, the method may further include any one or more of following operations of:
acquiring a location of the smart wearable device via a global position system (GPS) technology, and determining the distance between the smart wearable device and the intelligent electric apparatus in accordance with the location of the smart wearable device; or
determining the distance between the smart wearable device and the intelligent electric apparatus via an infrared detection technology; or
determining the signal intensity of the message in accordance with the message.

In an embodiment, if the preset parameter includes the distance between the smart wearable device and the intelligent electric apparatus, controlling the operating mode of the intelligent electric apparatus in accordance with the preset parameter may include:
turning on the intelligent electric apparatus if the distance is less than a first threshold or within a first predetermined range for a predetermined period; and/or
turning off the intelligent electric apparatus if the distance is greater than a second threshold or within a second predetermined range for the predetermined period,
in which the first threshold is less than or equal to the second threshold, and a maximal value of the first predetermined range is less than or equal to a minimal value of the second predetermined range.

In an embodiment, if the preset parameter includes the signal intensity of the message, controlling the operating mode of the intelligent electric apparatus in accordance with the preset parameter may include:
turning on the intelligent electric apparatus if the signal intensity is greater than a third threshold or within a third predetermined range for a predetermined period; and/or
turning off the intelligent electric apparatus if the signal intensity is less than a fourth threshold or within a fourth predetermined range for the predetermined period,
in which the third threshold is greater than or equal to the fourth threshold, and a minimal value of the third predetermined range is greater than or equal to a maximal value of the fourth predetermined range.

In an embodiment, controlling the operating mode of the intelligent electric apparatus in accordance with the preset parameter may include:
determining an operating mode of the intelligent electric apparatus corresponding to the preset parameter in accordance with a preset correspondence between a predetermined parameter range and the operating mode of the intelligent electric apparatus; and
adjusting the operating mode of the intelligent electric apparatus to the operating mode of the intelligent electric apparatus corresponding to the preset parameter.

In an embodiment, the intelligent electric apparatus may include: a smart air conditioner, a smart television, an intelligent lamp, a smart tablet, and an intelligent electric water heater.

In an embodiment, the method may further include: adjusting the operating mode of the intelligent electric apparatus to a predetermined operating mode, if the message broadcasted by the smart wearable device is not received in a predetermined period or there is a failure to judge whether the smart wearable device is the default smart wearable device in accordance with the message.

In an embodiment, if the intelligent electric apparatus is a smart air conditioner, the method may further include:
acquiring a signal sending orientation of the message; and
controlling a swing direction of the smart air conditioner in accordance with the signal sending orientation of the message.

According to a second aspect of embodiments of the present disclosure, there is provided a working device of an intelligent electric apparatus, including:
a first acquiring module, configured to acquire a message broadcasted by a smart wearable device;
a judging module, configured to judge whether the smart wearable device is a default smart wearable device in accordance with the message; and
a first controlling module, configured to control an operating mode of the intelligent electric apparatus in accordance with a preset parameter if the smart wearable device is determined as the default smart wearable device, the preset parameter including a parameter reflecting a distance between the smart wearable device and the intelligent electric apparatus.

In an embodiment, the judging module may include:
an acquiring sub-module, configured to acquire an identification of the smart wearable device from the message;
a judging sub-module, configured to judge whether the identification is a first device identification preset in a terminal for controlling the intelligent electric apparatus; or judge whether the identification is a second device identification bounded to the intelligent electric apparatus; or judge whether the identification is both a first device identification preset in a terminal for controlling the intelligent electric apparatus and a second device identification bounded to the intelligent electric apparatus;
a first determining sub-module, configured to determine the smart wearable device is the default smart wearable device if a judgment result is positive; and
a second determining sub-module, configured to determine the smart wearable device is not the default smart wearable device if the judgment result is negative.

In an embodiment, the identification of the smart wearable device may include a hardware address of the smart wearable device or a unique name of the smart wearable device.

In an embodiment, the preset parameter may include any one or more of the distance between the smart wearable device and the intelligent electric apparatus and a signal intensity of the message.

In an embodiment, the device may further include any one or more of following modules:
a first determining module, configured to acquire a location of the smart wearable device via a global position system (GPS) technology, and determine the distance between the smart wearable device and the intelligent electric apparatus in accordance with the location of the smart wearable device;
a second determining module, configured to determine the distance between the smart wearable device and the intelligent electric apparatus via an infrared detection technology; and
a third determining module, configured to determine the signal intensity of the message in accordance with the message.

In an embodiment, the first controlling module may include:
a first turning on sub-module, configured to turn on the intelligent electric apparatus if the distance is less than a first threshold or within a first predetermined range for a predetermined period; and/or
a first turning off sub-module, configured to turn off the intelligent electric apparatus if the distance is greater than a second threshold or within a second predetermined range for the predetermined period,
in which the first threshold is less than or equal to the second threshold, and a maximal value of the first predetermined range is less than or equal to a minimal value of the second predetermined range.

In an embodiment, if the preset parameter includes the signal intensity of the message, the first controlling module may further include:
a second turning on sub-module, configured to turn on the intelligent electric apparatus if the signal intensity is greater than a third threshold or within a third predetermined range for a predetermined period; and/or
a second turning off sub-module, configured to turn off the intelligent electric apparatus if the signal intensity is less than a fourth threshold or within a fourth predetermined range for the predetermined period,
in which the third threshold is greater than or equal to the fourth threshold, and a minimal value of the third predetermined range is greater than or equal to a maximal value of the fourth predetermined range.

In an embodiment, the first controlling module may include:
a third determining sub-module, configured to determine an operating mode of the intelligent electric apparatus corresponding to the preset parameter in accordance with a preset correspondence between a predetermined parameter range and the operating mode of the intelligent electric apparatus; and
an adjusting sub-module, configured to adjust the operating mode of the intelligent electric apparatus to the operating mode of the intelligent electric apparatus corresponding to the preset parameter.

In an embodiment, the intelligent electric apparatus may include: a smart air conditioner, a smart television, an intelligent lamp, a smart tablet, and an intelligent electric water heater.

In an embodiment, the device may further include: an adjusting module, configured to adjust the operating mode of the intelligent electric apparatus to a predetermined operating mode, if the message broadcasted by the smart wearable device is not received in a predetermined period or there is a failure to judge whether the smart wearable device is the default smart wearable device in accordance with the message.

In an embodiment, if the intelligent electric apparatus is a smart air conditioner, the device may further include:
a second acquiring module, configured to acquire a signal sending orientation of the message; and
a second controlling module, configured to control a swing direction of the smart air conditioner in accordance with the signal sending orientation of the message.

According to a third aspect of embodiments of the present disclosure, there is provided a working device of an intelligent electric apparatus, including:
a processor; and
a memory for storing instructions executable by the processor,
in which the processor is configured to:
acquire a message broadcasted by a smart wearable device;
judge whether the smart wearable device is a default smart wearable device in accordance with the message; and
control an operating mode of the intelligent electric apparatus in accordance with a preset parameter if the smart wearable device is determined as the default smart wearable device, the preset parameter including a parameter reflecting a distance between the smart wearable device and the intelligent electric apparatus.

The technical solution provided by embodiments of the present disclosure may have the following advantageous effects. The message broadcasted by the smart wearable device is acquired; whether the smart wearable device is a default smart wearable device is determined in accordance with the message; in the case that the smart wearable device is determined as the default smart wearable device, the operating mode of the intelligent electric apparatus is controlled in accordance with a preset parameter, the preset parameter including a parameter reflecting a distance between the smart wearable device and the intelligent electric apparatus, so as to control the intelligent electric apparatus in a smart manner in accordance with the distance between the smart wearable device and the intelligent electric apparatus, so that it is not necessary for the user to operate manually, thereby improving the user's experience.

It is to be understood that both the foregoing general description and the following detailed description are illustrative and explanatory only and are not restrictive of the disclosure, as claimed.

### BRIEF DESCRIPTION OF THE DRAWINGS

The accompanying drawings, which are incorporated in and constitute a part of this specification, illustrate embodiments consistent with the disclosure and, together with the description, serve to explain the principles of the disclosure.
Fig. 1 is a flow chart showing a working method of an intelligent electric apparatus according to an illustrative embodiment;
Fig. 2 is a flow chart showing step S102 in the working method of an intelligent electric apparatus according to an illustrative embodiment;
Fig. 3A is a flow chart showing another working method of an intelligent electric apparatus according to an illustrative embodiment;
Fig. 3B is a flow chart showing still another working method of an intelligent electric apparatus according to an illustrative embodiment;
Fig. 3C is a flow chart showing a further working method of an intelligent electric apparatus according to an illustrative embodiment;
Fig. 3D is a flow chart showing step S103 in the working method of an intelligent electric apparatus according to an illustrative embodiment;
Fig. 3E is another flow chart showing step S103 in the working method of an intelligent electric apparatus according to an illustrative embodiment;
Fig. 4A is still another flow chart showing step S103 in the working method of an intelligent electric apparatus according to an illustrative embodiment;
Fig. 4B is a flow chart showing a further working method of an intelligent electric apparatus according to an illustrative embodiment;
Fig. 5 is a flow chart showing a working method of an intelligent electric apparatus according to an illustrative embodiment;
Fig. 6 is a flow chart showing another working method of an intelligent electric apparatus according to an illustrative embodiment;
Fig. 7 is a block diagram illustrating a working device of an intelligent electric apparatus according to an illustrative embodiment;
Fig. 8 is a block diagram illustrating a judging module 72 in the working device of an intelligent electric apparatus according to an illustrative embodiment;
Fig. 9 is a block diagram illustrating another working device of an intelligent electric apparatus according to an illustrative embodiment;
Fig. 10 is a block diagram illustrating a first controlling module 73 in the working device of an intelligent electric apparatus according to an illustrative embodiment;
Fig. 11 is another block diagram illustrating a first controlling module 73 in the working device of an intelligent electric apparatus according to an illustrative embodiment;
Fig. 12 is a block diagram illustrating a first controlling module 73 in the working device of an intelligent electric apparatus according to an illustrative embodiment;
Fig. 13 is a block diagram illustrating still another working device of an intelligent electric apparatus according to an illustrative embodiment;
Fig. 14 is a block diagram illustrating a further working device of an intelligent electric apparatus according to an illustrative embodiment; and
Fig. 15 is a block diagram applicable to a working device of an intelligent electric apparatus according to an illustrative embodiment.

### DETAILED DESCRIPTION

Reference will now be made in detail to illustrative embodiments, examples of which are illustrated in the accompanying drawings. The following description refers to the accompanying drawings in which the same numbers in different drawings represent the same or similar elements unless otherwise represented. The implementations set forth in the following description of illustrative embodiments do not represent all implementations consistent with the disclosure. Instead, they are merely examples of apparatuses and methods consistent with aspects related to the disclosure as recited in the appended claims.

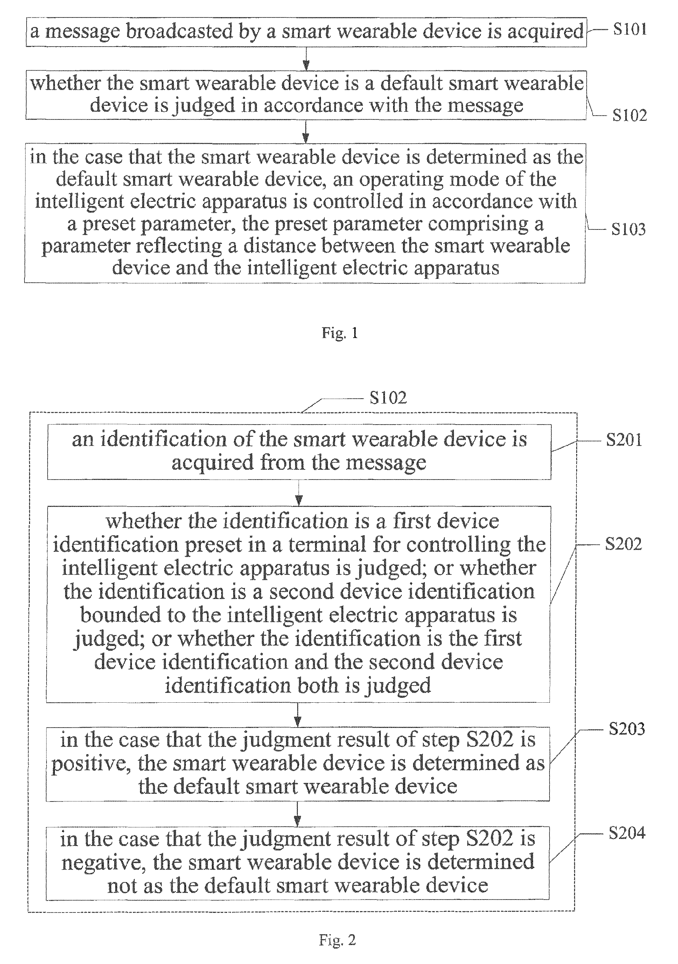

Fig. 1 is a flow chart showing a working method of an intelligent electric apparatus according to an illustrative embodiment. Referring to Fig. 1, the method may be used in an intelligent appliance, or a mobile or fixed terminal, which is not limited herein. The above method includes the following steps S101 to S104.

In step S101, a message broadcasted by a smart wearable device is acquired.

An intelligent electric apparatus employs a wireless communication protocol, such as wireless fidelity (Wi-Fi), Bluetooth and Zigbee (multiple protocols may be supported at the same time; however the Bluetooth is required at least). The intelligent electric apparatus may communicate with a terminal used by a user, and receive a local or remote control instruction from a client-side of the terminal. The user wears the smart wearable device employing a Bluetooth protocol, such as a smart band and smart glasses. Such a smart wearable device may be bound or not bound to the intelligent electric apparatus. The smart wearable device periodically broadcasts a wireless message, and the intelligent electric apparatus receives the message broadcast by the smart wearable device via Wi-Fi, Bluetooth or Zigbee when such the method is used in the intelligent electric apparatus; or the terminal receives the message broadcasted by the smart wearable device via Wi-Fi, Bluetooth or Zigbee when such the method is used in the terminal used by the user.

In step S102, whether the smart wearable device is a default smart wearable device is judged in accordance with the message.

In an embodiment, as shown in Fig. 2, the step S102 may be implemented as steps S201 to S204 as below.

In step S201, an identification of the smart wearable device is acquired from the message.

The message broadcast by the smart wearable device includes the identification of the smart wearable device, facilitating other devices to identify it. After receiving the message, the intelligent electric apparatus or the terminal parses the identification of the smart wearable device in the message. In an embodiment, the identification of the smart wearable device may include a hardware address of the smart wearable device or a unique name of the smart wearable device.

In step S202, whether the identification is a first device identification preset in a terminal for controlling the intelligent electric apparatus is judged; or whether the identification is a second device identification bound to the intelligent electric apparatus is judged; or whether the identification is the first device identification and the second device identification both is judged; step S203 is implemented continuously if a judgment result is positive; step S204 is implemented continuously if the judgment result is negative.

In the current step, the smart wearable device may, via its identification, be bound to the intelligent electric apparatus in advance; or although the smart wearable device is not bound to the intelligent electric apparatus, the terminal used by the user has been set with device identification capable of linking with the smart wearable device. The user may set that the smart wearable device bound to the terminal used by the user is capable of linking with the intelligent electric apparatus in the client-side of the terminal in advance.

In step S203, in the case that the judgment result of step S202 is positive, the smart wearable device is determined as the default smart wearable device.

In step S204, in the case that the judgment result of step S202 is negative, the smart wearable device is determined not as the default smart wearable device.

In the present embodiment, the identification of the smart wearable device is utilized for determining whether the smart wearable device is the default smart wearable device, so as to determine whether the smart wearable device is the default smart wearable device accurately and rapidly.

In step S103, in the case that the smart wearable device is determined as the default smart wearable device, an operating mode of the intelligent electric apparatus is controlled in accordance with a preset parameter. The preset parameter includes a parameter reflecting a distance between the smart wearable device and the intelligent electric apparatus.

In an embodiment, there are various types of the preset parameters, like one or more of the distance between the smart wearable device and the intelligent electric apparatus, and a signal intensity of the message.

In an embodiment, prior to step S103, the method may further include any one or more of the following steps.

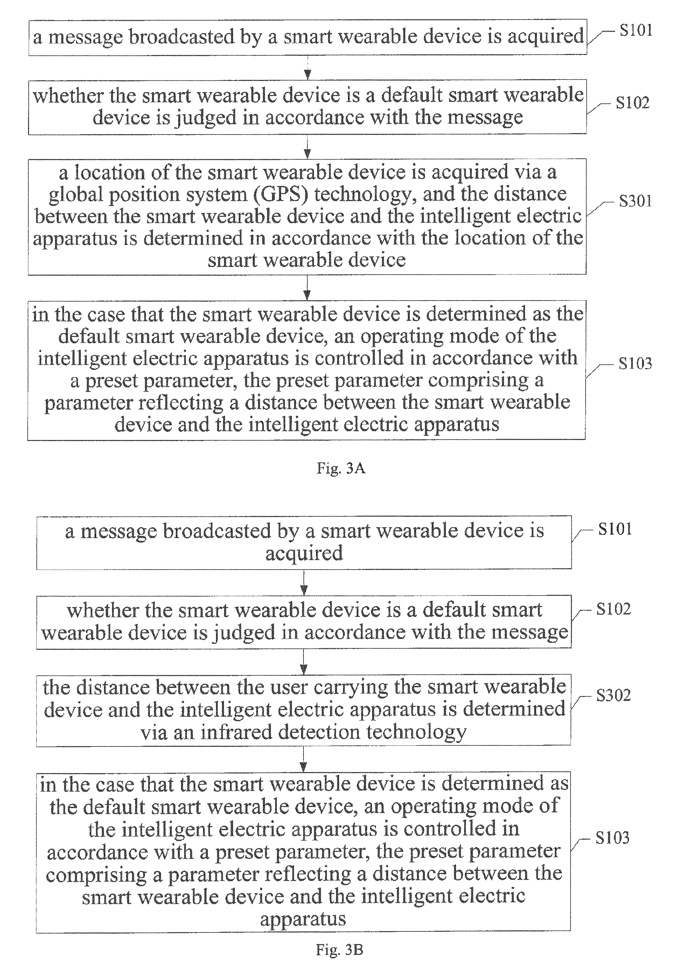

As shown in Fig. 3A, in step S301, a location of the smart wearable device is acquired via a global position system (GPS) technology, and the distance between the smart wearable device and the intelligent electric apparatus is determined in accordance with the location of the smart wearable device.

The GPS technology may position out the location of the smart wearable device, so as to determine the distance between the smart wearable device and the intelligent electric apparatus conveniently.

As shown in Fig. 3B, in step S302, the distance between the user carrying the smart wearable device and the intelligent electric apparatus is determined via an infrared detection technology.

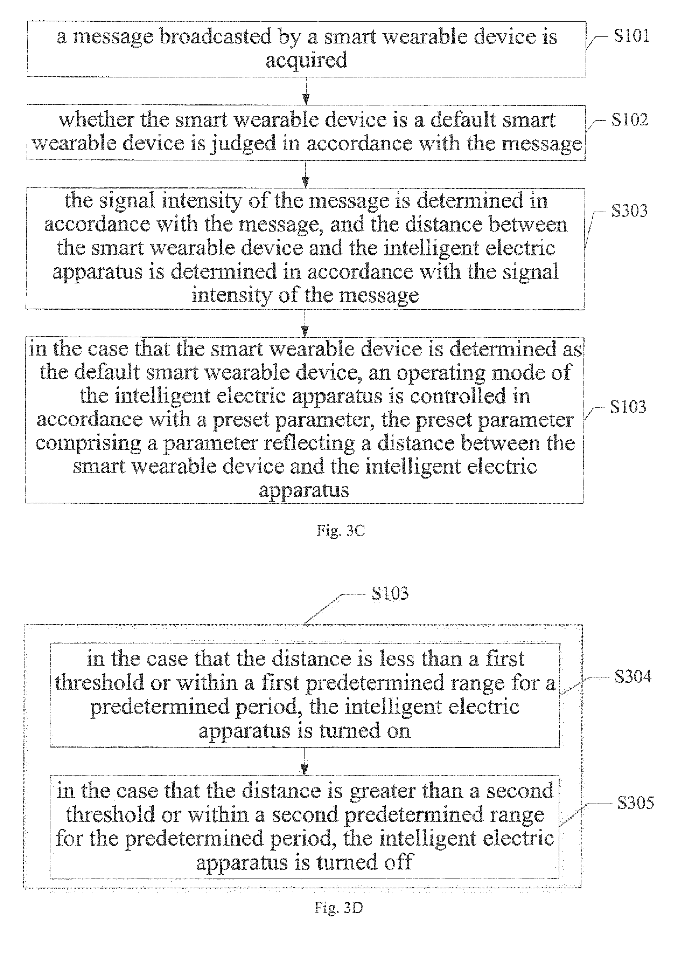

As shown in Fig. 3C, in step S303, the signal intensity of the message is determined in accordance with the message, and the distance between the smart wearable device and the intelligent electric apparatus is determined in accordance with the signal intensity of the message.

A received signal strength indicator (RSSI) of the message is determined in accordance with the message, and a distance between a signal sending point and a signal receiving point is measured by the signal intensity received. In the present step, the signal sending point is the smart wearable device, and the signal receiving point is the intelligent electric apparatus, such that the distance between the smart wearable device and the intelligent electric apparatus can be determined in accordance with the signal intensity of the message. The stronger the signal intensity is, the shorter distance between the smart wearable device and the intelligent electric apparatus is; while the poorer the signal intensity is, the longer distance between the smart wearable device and the intelligent electric apparatus is. The distance between the smart wearable device and the intelligent electric apparatus is determined in accordance with the signal intensity of the message, which may be specifically implemented as signal intensity.

As shown in Figs. 3A, 3B and 3C, step S103 may be implemented as any one step in the above three steps, or may include three steps or any two of three steps at the same time. In the case that step S103 includes three steps or any two of three steps at the same time, these steps are not implemented in sequence.

In an embodiment, as shown in Fig. 3D, in the case that the preset parameter includes the distance between the smart wearable device and the intelligent electric apparatus, step S103 may be implemented as step S304 and/or step S305 as below.

In step S304, in the case that the distance is less than a first threshold or within a first predetermined range for a predetermined period, the intelligent electric apparatus is turned on.

By way of example assuming that the first threshold is 3 meters and the predetermined period is 1 minute, in the case that the distance between the smart wearable device and the intelligent electric apparatus is less than 3 meters for 1 minute, as the user wears the smart wearable device, it indicates that the user is near the intelligent electric apparatus or in the home. At this time, the intelligent electric apparatus is turned on.

In step S305, in the case that the distance is greater than a second threshold or within a second predetermined range for the predetermined period, the intelligent electric apparatus is turned off.

The first threshold is less than or equal to the second threshold, and a maximal value of the first predetermined range is less than or equal to a minimal value of the second predetermined range.

By way of example, in the case that the preset parameter is the distance between the smart wearable device and the intelligent electric apparatus, it may be implemented that the second threshold is 6 meters and the predetermined period is 2 minutes, in the case that the distance between the smart wearable device and the intelligent electric apparatus is greater than 6 meters for 2 minute, as the user wears the smart wearable device, it indicates that the user is far away from the intelligent electric apparatus or stays away from the home. At this time, the intelligent electric apparatus may be turned off.

Fig. 3D shows a circumstance where step S103 includes steps S304 and S305 at the same time, which are not implemented in sequence. Alternatively, step S103 may also include either step S304 or step S305 only.

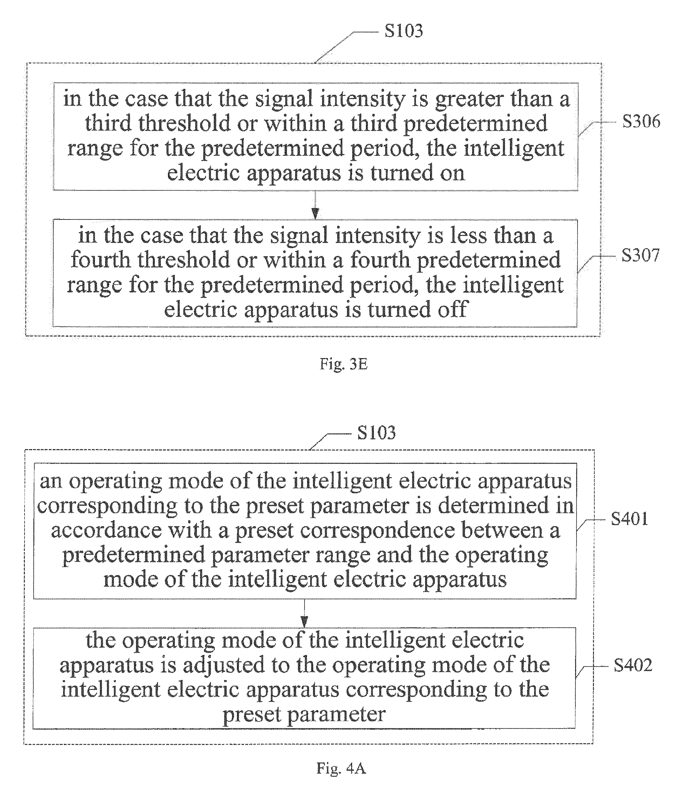

In an embodiment, as shown in Fig. 3E, in the case that the preset parameter includes the signal intensity of the message, step S103 may also be implemented as step S306 and/or step S307 as below.

In step S306, in the case that the signal intensity is greater than a third threshold or within a third predetermined range for the predetermined period, the intelligent electric apparatus is turned on; and/or in step S307, in the case that the signal intensity is less than a fourth threshold or within a fourth predetermined range for the predetermined period, the intelligent electric apparatus is turned off. The third threshold is greater than or equal to the fourth threshold, and a minimal value of the third predetermined range is greater than or equal to a maximal value of the fourth predetermined range.

During specific implementation, the distance between the signal sending point (the smart wearable device) and the signal receiving point (the intelligent electric apparatus) is measured in accordance with the signal intensity of the message received. The signal intensity of the message may be classified into a strong signal and a poor signal. In the case that the signal intensity of the message is greater than the third threshold or within the third predetermined range for the predetermined period, the corresponding signal intensity of the message is strong; while in the case that the signal intensity of the message is less than the fourth threshold or within the fourth predetermined range for the predetermined period, the corresponding signal intensity of the message is poor. When the signal intensity of the message is strong, the intelligent electric apparatus is turned on; while when the signal intensity of the message is poor, the intelligent electric apparatus is turned off.

Fig. 3E shows a circumstance where step S103 includes steps S306 and S307 at the same time, which are not implemented in sequence. Alternatively, step S103 may also include either step S306 or step S307 only.

In an embodiment, as shown in Fig. 4A, step S103 may be implemented as steps S401 and S402 as below.

In step S401, an operating mode of the intelligent electric apparatus corresponding to the preset parameter is determined in accordance with a preset correspondence between a predetermined parameter range and the operating mode of the intelligent electric apparatus; and

In step S402, the operating mode of the intelligent electric apparatus is adjusted to the operating mode of the intelligent electric apparatus corresponding to the preset parameter.

In the case that the intelligent electric apparatus is a smart air conditioner, the operating mode of the smart air conditioner may include: a cooling mode, a heating mode and a ventilating mode, the correspondence between the predetermined parameter range and the operating mode of the intelligent electric apparatus may be set in advance under different operating modes. By way of example, when the operating mode is the ventilating mode, several distance ranges may be set in advance, like a range between 0 to 3 meters, a range between 3 to 5 meters, and a range between 5 to 6 meters, such three ranges may correspond to operating modes of low wind speed, medium wind speed and high wind speed, respectively, then in the case that the distance between the smart wearable device and the smart air conditioner is 5 meters, the operating mode of the smart air conditioner may be automatically adjusted to medium wind speed. In the above embodiment, the operating mode of the intelligent electric apparatus may be adjusted in accordance with the preset parameter, so as to meet user's requirements.

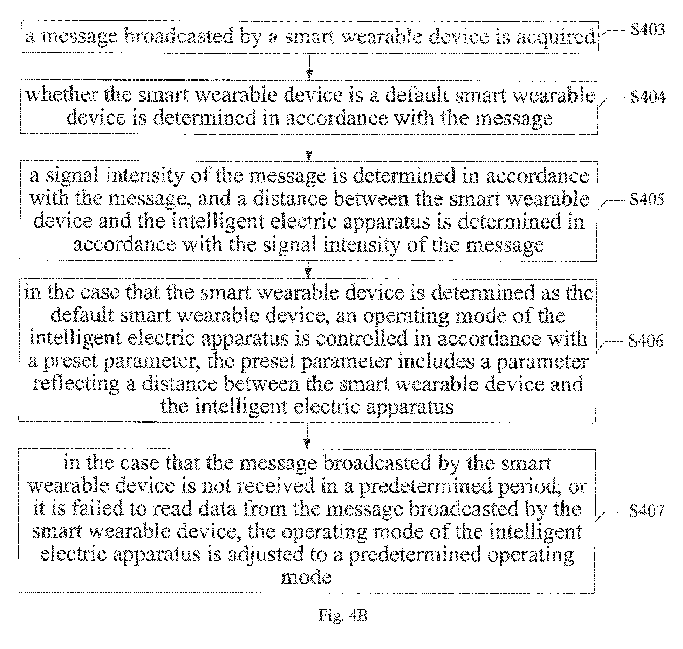

In an embodiment, as shown in Fig. 4B, the above method may further include steps S403 to S407.

In step S403, a message broadcasted by a smart wearable device is acquired.

In step S404, whether the smart wearable device is a default smart wearable device is determined in accordance with the message.

In step S405, a signal intensity of the message is determined in accordance with the message, and a distance between the smart wearable device and the intelligent electric apparatus is determined in accordance with the signal intensity of the message.

In step S406, in the case that the smart wearable device is determined as the default smart wearable device, an operating mode of the intelligent electric apparatus is controlled in accordance with a preset parameter. The preset parameter includes a parameter reflecting a distance between the smart wearable device and the intelligent electric apparatus.

In step S407, in the case that the message broadcasted by the smart wearable device is not received in a predetermined period; or there is a failure to judge whether the smart wearable device is the default smart wearable device in accordance with the message, the operating mode of the intelligent electric apparatus is adjusted to a predetermined operating mode.

In the case that the intelligent electric apparatus is incapable of receiving the message broadcast by the smart wearable device or reading data from the message broadcast by the smart wearable device; or there is a failure to judge whether the smart wearable device is the default smart wearable device in accordance with the message, it determines that the smart wearable device is in a leaving state, a closing state or a failure state. At this time, the intelligent electric apparatus may be adjusted to be in the predetermined mode.

For example, in the case that the smart wearable device is in the closing or failure state, the intelligent electric apparatus is adjusted to be in a standby sleep mode. In the case that the smart wearable device is in the leaving state, the intelligent electric apparatus is adjusted to be in an underpowered sleep mode. The sleep mode may include various sub-modes, and a parameter thereof may be set in advance by the user, or may be acquired by learning historical data sent from the smart wearable device.

According to embodiments of the present disclosure, the above method may control the intelligent electric apparatus in a smart manner in accordance with the distance between the smart wearable device and the intelligent electric apparatus, so that it is not necessary for the user to operate manually, thereby improving the user's experience.

The above technical solution provided by embodiments of the present disclosure is illustrated with specific embodiments hereinafter.

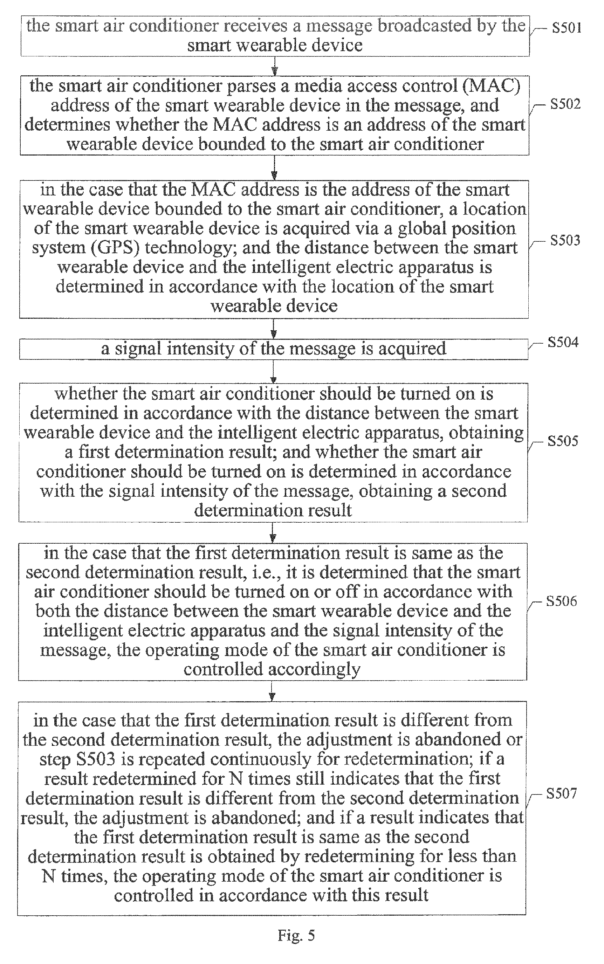

Using the working method of the intelligent electric apparatus provided by embodiments of the present disclosure, in which the smart wearable device is a smart band, and the intelligent electric apparatus is a smart air conditioner, as shown in Fig. 5, the smart air conditioner performs the following steps.

In step S501, the smart air conditioner receives a message broadcast by the smart wearable device.

In step S502, the smart air conditioner parses a media access control (MAC) address of the smart wearable device in the message, and determines whether the MAC address is an address of the smart wearable device bound to the smart air conditioner.

In step S503, in the case that the MAC address is the address of the smart wearable device bound to the smart air conditioner, a location of the smart wearable device is acquired via a global position system (GPS) technology; and the distance between the smart wearable device and the intelligent electric apparatus is determined in accordance with the location of the smart wearable device.

In step S504, a signal intensity of the message is acquired.

In step S505, whether the smart air conditioner should be turned on is determined in accordance with the distance between the smart wearable device and the intelligent electric apparatus, obtaining a first determination result; and whether the smart air conditioner should be turned on is determined in accordance with the signal intensity of the message, obtaining a second determination result.

In step S506, in the case that the first determination result is the same as the second determination result, the operating mode of the smart air conditioner is controlled accordingly. The first determination result being same as the second determination result indicates that it is determined that the smart air conditioner should be turned on or off in accordance with both the distance between the smart wearable device and the intelligent electric apparatus and the signal intensity of the message.

In step S507, in the case that the first determination result is different from the second determination result, the adjustment is abandoned or step S503 is repeated continuously for redetermination. If a result redetermined for N times still indicates that the first determination result is different from the second determination result, the adjustment is abandoned, in which N is greater than or equal to 2; and if a result indicates that the first determination result is the same as the second determination result is obtained by redetermining for less than N times, the operating mode of the smart air conditioner is controlled in accordance with this result.

In an embodiment, the intelligent electric apparatus may include: a smart air conditioner, a smart television, an intelligent lamp, a smart tablet, an intelligent electric water heater and the like.

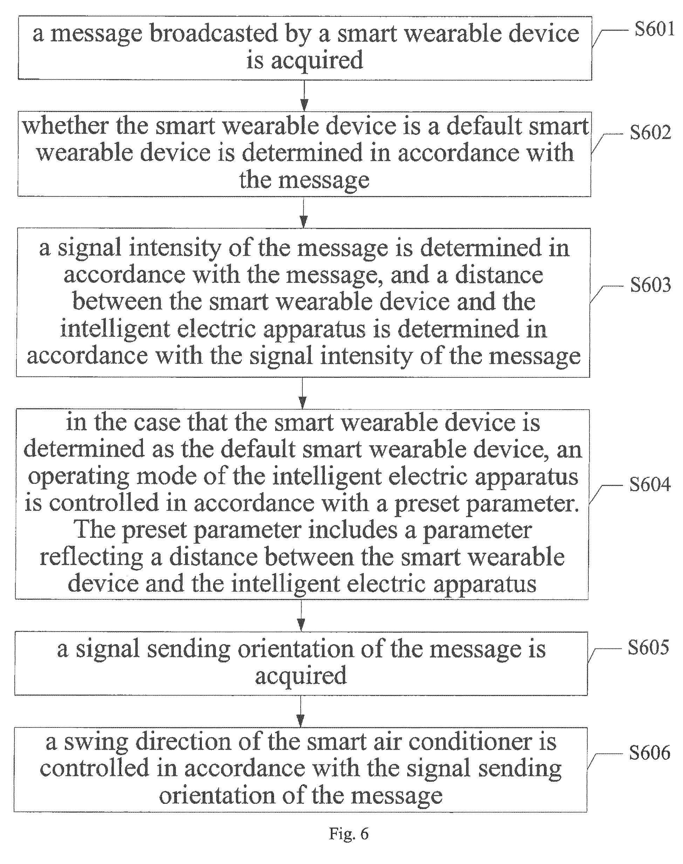

In an embodiment, in the case that the intelligent electric apparatus is the smart air conditioner, as shown in Fig. 6, the method may include the following steps S601 to S606.

In step S601, a message broadcast by a smart wearable device is acquired.

In step S602, whether the smart wearable device is a default smart wearable device is determined in accordance with the message.

In step S603, a signal intensity of the message is determined in accordance with the message, and a distance between the smart wearable device and the intelligent electric apparatus is determined in accordance with the signal intensity of the message.

In step S604, in the case that the smart wearable device is determined as the default smart wearable device, an operating mode of the intelligent electric apparatus is controlled in accordance with a preset parameter. The preset parameter includes a parameter reflecting a distance between the smart wearable device and the intelligent electric apparatus.

In step S605, a signal sending orientation of the message is acquired.

In step S606, a swing direction of the smart air conditioner is controlled in accordance with the signal sending orientation of the message.

In the present embodiment, a message sending point, i.e., an orientation of the smart wearable device, may be determined in accordance with the signal sending orientation of the message, so as to determine an orientation of the user, thereby controlling the swing direction of the smart air conditioner. For example, when the user is at a certain position to the right of the smart air conditioner, the smart air conditioner may be controlled to blow towards its left side, so as to prevent an air outlet from facing the user directly.

The following device embodiments of the present disclosure may be used to perform the method embodiments of the present disclosure.

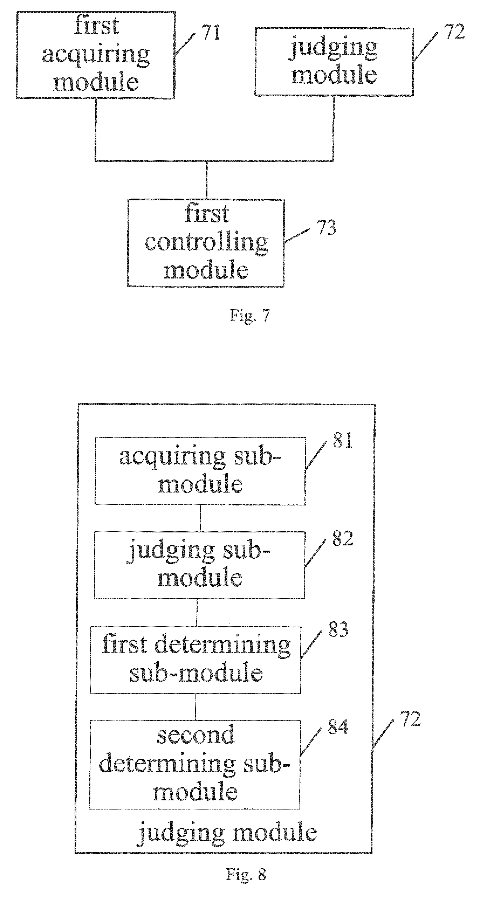

Fig. 7 is a block diagram illustrating a working device of an intelligent electric apparatus according to an illustrative embodiment. The device may be implemented as all or part of an electronic device through software, hardware or a combination thereof. As shown in Fig. 7, the working device of the intelligent electric apparatus may include:
a first acquiring module 71, configured to acquire a message broadcast by a smart wearable device;
a judging module 72, configured to judge whether the smart wearable device is a default smart wearable device in accordance with the message; and
a first controlling module, configured to control an operating mode of the intelligent electric apparatus in accordance with a preset parameter in the case that the smart wearable device is determined as the default smart wearable device, the preset parameter including a parameter reflecting a distance between the smart wearable device and the intelligent electric apparatus.

In an embodiment, as shown in Fig. 8, the judging module 72 may include:
an acquiring sub-module 81, configured to acquire an identification of the smart wearable device from the message;
a judging sub-module 82, configured to judge whether the identification is a first device identification preset in a terminal for controlling the intelligent electric apparatus; or judge whether the identification is a second device identification bounded to the intelligent electric apparatus; or judge whether the identification is the first device identification and the second device identification both;
a first determining sub-module 83, configured to determine the smart wearable device is the default smart wearable device if a judgment result is positive; and
a second determining sub-module 84, configured to determine the smart wearable device is not the default smart wearable device if a judgment result is negative.

In an embodiment, the identification of the smart wearable device may include a hardware address of the smart wearable device or a unique name of the smart wearable device.

In an embodiment, the preset parameter may include one or more of the distance between the smart wearable device and the intelligent electric apparatus and a signal intensity of the message.

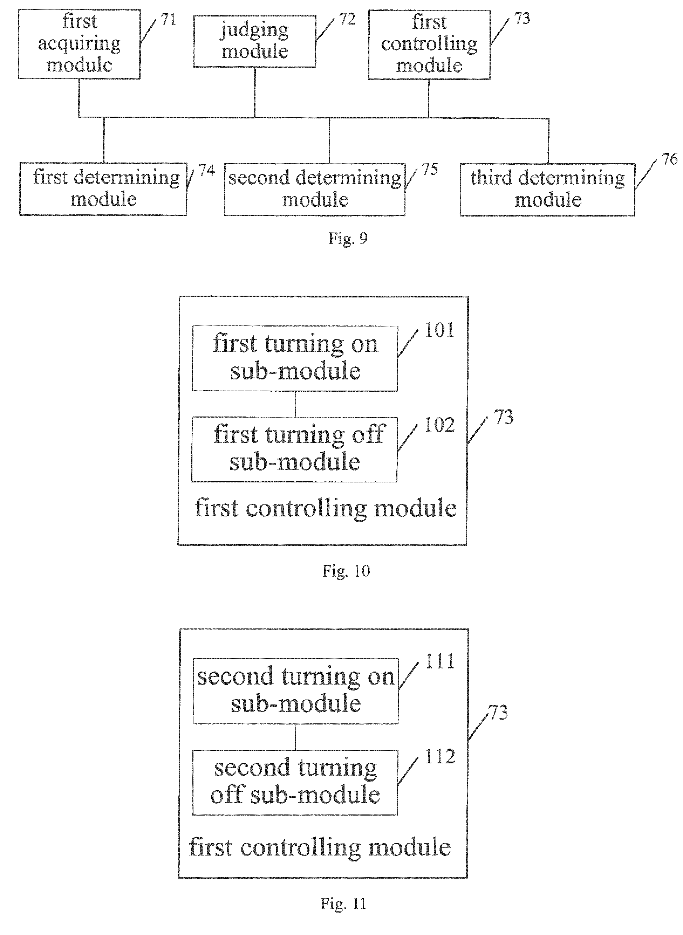

In an embodiment, as shown in Fig. 9, the above device may further include any one or more of the following modules:
a first determining module 74, configured to acquire a location of the smart wearable device via a global position system (GPS) technology, and determine the distance between the smart wearable device and the intelligent electric apparatus in accordance with the location of the smart wearable device;
a second determining module 75, configured to determine the distance between the smart wearable device and the intelligent electric apparatus via an infrared detection technology; and
a third determining module 76, configured to determine the signal intensity of the message in accordance with the message.

In an embodiment, as shown in Fig. 10, in the case that the preset parameter includes the distance between the smart wearable device and the intelligent electric apparatus, the first controlling module 73 may include:
a first turning on sub-module 101, configured to turn on the intelligent electric apparatus in the case that the distance is less than a first threshold or within a first predetermined range for a predetermined period; and/or
a first turning off sub-module 102, configured to turn off the intelligent electric apparatus in the case that the distance is greater than a second threshold or within a second predetermined range for the predetermined period,
in which the first threshold is less than or equal to the second threshold, and a maximal value of the first predetermined range is less than or equal to a minimal value of the second predetermined range.

In an embodiment, as shown in Fig. 11, in the case that the preset parameter includes the signal intensity of the message, the first controlling module 73 may further include:
a second turning on sub-module 111, configured to turn on the intelligent electric apparatus in the case that the signal intensity is greater than a third threshold or within a third predetermined range for a predetermined period; and/or
a second turning off sub-module 112, configured to turn off the intelligent electric apparatus in the case that the signal intensity is less than a fourth threshold or within a fourth predetermined range for the predetermined period,
in which the third threshold is greater than or equal to the fourth threshold, and a minimal value of the third predetermined range is greater than or equal to a maximal value of the fourth predetermined range.

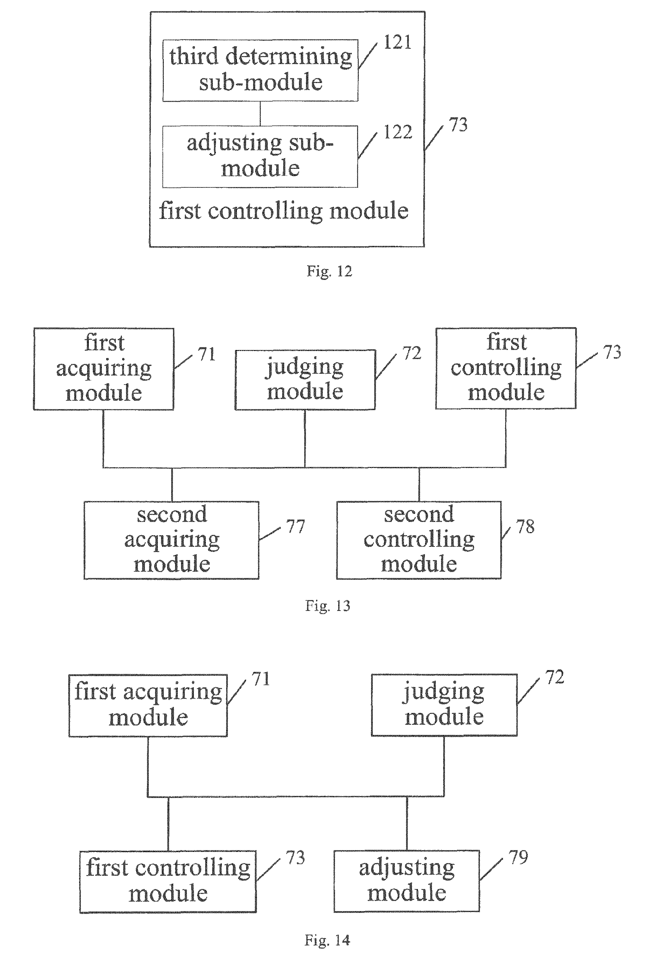

In an embodiment, as shown in Fig. 12, the first controlling module 73 may include:
a third determining sub-module 121, configured to determine an operating mode of the intelligent electric apparatus corresponding to the preset parameter in accordance with a preset correspondence between a predetermined parameter range and the operating mode of the intelligent electric apparatus; and
an adjusting sub-module 122, configured to adjust the operating mode of the intelligent electric apparatus to the operating mode of the intelligent electric apparatus corresponding to the preset parameter.

In an embodiment, the intelligent electric apparatus may include: a smart air conditioner, a smart television, an intelligent lamp, a smart tablet, and an intelligent electric water heater.

In an embodiment, in the case that the intelligent electric apparatus is the smart air conditioner, as shown in Fig. 13, the above device may further include:
a second acquiring module 77, configured to acquire a signal sending orientation of the message; and
a second controlling module 78, configured to control a swing direction of the smart air conditioner in accordance with the signal sending orientation of the message.

In an embodiment, as shown in Fig. 14, the above device may further include:
an adjusting module 79, configured to adjust the operating mode of the intelligent electric apparatus to a predetermined operating mode, in the case that the message broadcast by the smart wearable device is not received in a predetermined period or there is a failure to judge whether the smart wearable device is the default smart wearable device in accordance with the message.

According to a third aspect of embodiments of the present disclosure, there is provided a working device of an intelligent electric apparatus, including:
a processor; and
a memory for storing instructions executable by the processor,
in which the processor is configured to:
acquire a message broadcast by a smart wearable device;
judge whether the smart wearable device is a default smart wearable device in accordance with the message; and
control an operating mode of the intelligent electric apparatus in accordance with a preset parameter if the smart wearable device is determined as the default smart wearable device, the preset parameter including a parameter reflecting a distance between the smart wearable device and the intelligent electric apparatus.

As for the above processor, it judges whether the smart wearable device is a default smart wearable device in accordance with the message by:
acquiring an identification of the smart wearable device from the message;
judging whether the identification is a first device identification preset in a terminal for controlling the intelligent electric apparatus; or judging whether the identification is a second device identification bounded to the intelligent electric apparatus; or judging whether the identification is both the first device identification and the second device identification;
determining the smart wearable device is the default smart wearable device if a determination result is positive; and
determining the smart wearable device is not the default smart wearable device if a determination result is negative.

As for the above processor, the identification of the smart wearable device may include a hardware address of the smart wearable device or a unique name of the smart wearable device.

In an embodiment, the preset parameter may include one or more of the distance between the smart wearable device and the intelligent electric apparatus and the signal intensity of the message.

As for the above processor, prior to controlling the operating mode of the intelligent electric apparatus in accordance with the preset parameter, the processor may be further configured to perform any one or more of the following operations of:
acquiring a location of the smart wearable device via a global position system (GPS) technology, and determining the distance between the smart wearable device and the intelligent electric apparatus in accordance with the location of the smart wearable device;
determining the distance between the smart wearable device and the intelligent electric apparatus via an infrared detection technology; and
determining the signal intensity of the message in accordance with the message.

As for the above processor, it may control the operating mode of the intelligent electric apparatus in accordance with a preset parameter by:
turning on the intelligent electric apparatus in the case that the distance is less than a first threshold or within a first predetermined range for a predetermined period; and/or
turning off the intelligent electric apparatus in the case that the distance is greater than a second threshold or within a second predetermined range for the predetermined period,
in which the first threshold is less than or equal to the second threshold, and a maximal value of the first predetermined range is less than or equal to a minimal value of the second predetermined range.

As for the above processor, in the case that the preset parameter includes the signal intensity of the message, the processor controls the operating mode of the intelligent electric apparatus in accordance with the preset parameter by:
turning on the intelligent electric apparatus in the case that the signal intensity is greater than a third threshold or within a third predetermined range for the predetermined period; and/or
turning off the intelligent electric apparatus in the case that the signal intensity is less than a fourth threshold or within a fourth predetermined range for the predetermined period,
in which the third threshold is greater than or equal to the fourth threshold, and a minimal value of the third predetermined range is greater than or equal to a maximal value of the fourth predetermined range.

As for the above process, it controls the operating mode of the intelligent electric apparatus in accordance with the preset parameter by:
determining an operating mode of the intelligent electric apparatus corresponding to the preset parameter in accordance with a preset correspondence between a predetermined parameter range and the operating mode of the intelligent electric apparatus; and
adjusting the operating mode of the intelligent electric apparatus to the operating mode of the intelligent electric apparatus corresponding to the preset parameter.

As for the above process, the intelligent electric apparatus may include: a smart air conditioner, a smart television, an intelligent lamp, a smart tablet, an intelligent electric water heater.

As for the above process, in the case that the message broadcast by the smart wearable device is not received in a predetermined period or it is failed to judge whether the smart wearable device is the default smart wearable device in accordance with the message, the operating mode of the intelligent electric apparatus is adjusted to a predetermined operating mode.

As for the above process, in the case that the intelligent electric apparatus is the smart air conditioner, the processor is further configured to acquire a signal sending orientation of the message and control a swing direction of the smart air conditioner in accordance with the signal sending orientation of the message.

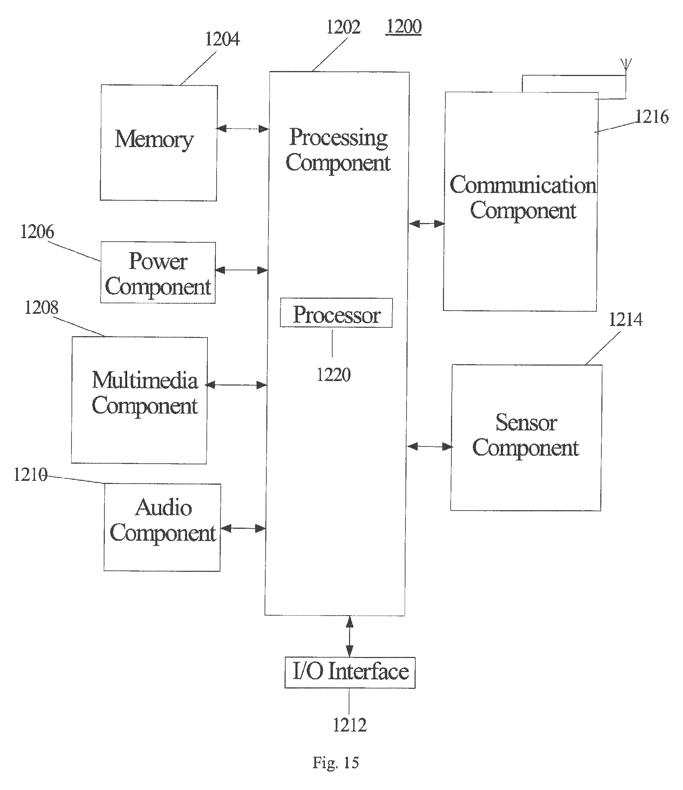

Fig. 15 is a block diagram illustrating a working device of an intelligent electric apparatus according to an illustrative embodiment. For example, the device 1200 may be a mobile phone, a computer, a digital broadcast terminal, a message receiving and sending device, a gaming console, a tablet device, a medical device, exercise equipment, a personal digital assistant, and the like.

The device 1200 may include one or more of the following components: a processing component 1202, a memory 1204, a power component 1206, a multimedia component 1208, an audio component 1210, an input/output (I/O) interface 1212, a sensor component 1214, and a communication component 1216.

The processing component 1202 typically controls overall operations of the device 1200, such as the operations associated with display, telephone calls, data communications, camera operations, and recording operations. The processing component 1202 may include one or more processors 1220 to execute instructions to perform all or part of the steps in the above described methods. Moreover, the processing component 1202 may include one or more modules which facilitate the interaction between the processing component 1202 and other components. For instance, the processing component 1202 may include a multimedia module to facilitate the interaction between the multimedia component 1208 and the processing component 1202.

The memory 1204 is configured to store various types of data to support the operation of the device 1200. Examples of such data include instructions for any applications or methods operated on the device 1200, contact data, phonebook data, messages, pictures, video, etc. The memory 1204 may be implemented using any type of volatile or non-volatile memory devices, or a combination thereof, such as a static random access memory (SRAM), an electricly erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 1206 provides power to various components of the device 1200. The power component 1206 may include a power management system, one or more power sources, and any other components associated with the generation, management, and distribution of power in the device 1200.

The multimedia component 1208 includes a screen providing an output interface between the device 1200 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a period of time and a pressure associated with the touch or swipe action. In some embodiments, the multimedia component 1208 includes a front camera and/or a rear camera. The front camera and the rear camera may receive an external multimedia datum while the device 1200 is in an operation mode, such as a photographing mode or a video mode. Each of the front camera and the rear camera may be a fixed optical lens system or have focus and optical zoom capability.

The audio component 1210 is configured to output and/or input audio signals. For example, the audio component 1210 includes a microphone ("MIC") configured to receive an external audio signal when the device 1200 is in an operation mode, such as a call mode, a recording mode, and a voice recognition mode. The received audio signal may be further stored in the memory 1204 or transmitted via the communication component 1216. In some embodiments, the audio component 1210 further includes a speaker to output audio signals.

The I/O interface 1212 provides an interface between the processing component 1202 and peripheral interface modules, such as a keyboard, a click wheel, buttons, and the like. The buttons may include, but are not limited to, a home button, a volume button, a starting button, and a locking button.

The sensor component 1214 includes one or more sensors to provide status assessments of various aspects of the device 1200. For instance, the sensor component 1214 may detect an open/closed status of the device 1200, relative positioning of components, e.g., the display and the keypad, of the device 1200, a change in position of the device 1200 or a component of the device 1200, a presence or absence of user contact with the device 1200, an orientation or an acceleration/deceleration of the device 1200, and a change in temperature of the device 1200. The sensor component 1214 may include a proximity sensor configured to detect the presence of nearby objects without any physical contact. The sensor component 1214 may also include a light sensor, such as a CMOS or CCD image sensor, for use in imaging applications. In some embodiments, the sensor component 1214 may also include an accelerometer sensor, a gyroscope sensor, a magnetic sensor, a pressure sensor, or a temperature sensor.

The communication component 1216 is configured to facilitate communication, wired or wirelessly, between the device 1200 and other devices. The device 1200 can access a wireless network based on a communication standard, such as WiFi, 2G, or 3G, or a combination thereof. In one illustrative embodiment, the communication component 1216 receives a broadcast signal or broadcast associated information from an external broadcast management system via a broadcast channel. In one illustrative embodiment, the communication component 1216 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In illustrative embodiments, the device 1200 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above described methods.

A non-transitory computer-readable storage medium having stored therein instructions that, when executed by a processor of the device 1200, causes the above device to perform a working method of an intelligent electric apparatus, the method including:
acquiring a message broadcasted by a smart wearable device;
judging whether the smart wearable device is a default smart wearable device in accordance with the message; and
controlling an operating mode of the intelligent electric apparatus in accordance with a preset parameter if the smart wearable device is determined as the default smart wearable device, the preset parameter including a parameter reflecting a distance between the smart wearable device and the intelligent electric apparatus.

In an embodiment, judging whether the smart wearable device is the default smart wearable device in accordance with the message may include:
acquiring identification of the smart wearable device from the message;
judging whether the identification is a first device identification preset in a terminal for controlling the intelligent electric apparatus; or judging whether the identification is a second device identification bounded to the intelligent electric apparatus; or judging whether the identification is both the first device identification and the second device identification;
determining the smart wearable device is the default smart wearable device in the case that a determination result is positive; and
determining the smart wearable device is not the default smart wearable device in the case that a determination result is negative.

In an embodiment, the identification of the smart wearable device may include a hardware address of the smart wearable device or a unique name of the smart wearable device.

In an embodiment, the preset parameter may include one or more of the distance between the smart wearable device and the intelligent electric apparatus and the signal intensity of the message.

In an embodiment, prior to controlling the operating mode of the intelligent electric apparatus in accordance with the preset parameter, the method may further include any one or more of the following operations of:
acquiring a location of the smart wearable device via a global position system (GPS) technology, and determining the distance between the smart wearable device and the intelligent electric apparatus in accordance with the location of the smart wearable device;
determining the distance between the smart wearable device and the intelligent electric apparatus via an infrared detection technology; and
determining the signal intensity of the message in accordance with the message.

In an embodiment, controlling the operating mode of the intelligent electric apparatus in accordance with the preset parameter may include:
turning on the intelligent electric apparatus in the case that the distance is less than a first threshold or within a first predetermined range for a predetermined period; and/or
turning off the intelligent electric apparatus in the case that the distance is greater than a second threshold or within a second predetermined range for the predetermined period,
in which the first threshold is less than or equal to the second threshold, and a maximal value of the first predetermined range is less than or equal to a minimal value of the second predetermined range.

In an embodiment, in the case that the preset parameter includes the signal intensity of the message, controlling the operating mode of the intelligent electric apparatus in accordance with the preset parameter may include:
turning on the intelligent electric apparatus in the case that the signal intensity is greater than a third threshold or within a third predetermined range for the predetermined period; and/or
turning off the intelligent electric apparatus in the case that the signal intensity is less than a fourth threshold or within a fourth predetermined range for the predetermined period,
in which the third threshold is greater than or equal to the fourth threshold, and a minimal value of the third predetermined range is greater than or equal to a maximal value of the fourth predetermined range.

In an embodiment, controlling the operating mode of the intelligent electric apparatus in accordance with the preset parameter may include:
determining an operating mode of the intelligent electric apparatus corresponding to the preset parameter in accordance with a preset correspondence between a predetermined parameter range and the operating mode of the intelligent electric apparatus; and
adjusting the operating mode of the intelligent electric apparatus to the operating mode of the intelligent electric apparatus corresponding to the preset parameter.

In an embodiment, the intelligent electric apparatus may include: a smart air conditioner, a smart television, an intelligent lamp, a smart tablet, an intelligent electric water heater.

In an embodiment, in the case that the message broadcast by the smart wearable device is not received in a predetermined period there is a failure to judge whether the smart wearable device is the default smart wearable device in accordance with the message, the operating mode of the intelligent electric apparatus is adjusted to a predetermined operating mode.

In an embodiment, in the case that the intelligent electric apparatus is the smart air conditioner, the method may further include:
acquiring a signal sending orientation of the message; and
controlling a swing direction of the smart air conditioner in accordance with the signal sending orientation of the message.

Other embodiments of the disclosure will be apparent to those skilled in the art from consideration of the specification and practice of the disclosure disclosed here. This application is intended to cover any variations, uses, or adaptations of the disclosure following the general principles thereof and including such departures from the present disclosure as come within known or customary practice in the art.

## Claims

1. A working method of an intelligent electric apparatus, comprising:
acquiring (S101, S403, S601) a message broadcast by a smart wearable device;
judging (S102, S404, S602) whether the smart wearable device is a default smart wearable device in accordance with the message; and
controlling (S103, S406, S604) an operating mode of the intelligent electric apparatus in accordance with a preset parameter if the smart wearable device is determined as the default smart wearable device, the preset parameter comprising a parameter reflecting a distance between the smart wearable device and the intelligent electric apparatus.

2. The method according to claim 1, wherein judging (S102, S404, S602) whether the smart wearable device is the default smart wearable device in accordance with the message comprises:
acquiring (S201) an identification of the smart wearable device from the message;
judging (S202) whether the identification is a first device identification preset in a terminal for controlling the intelligent electric apparatus; or judging whether the identification is a second device identification bound to the intelligent electric apparatus; or judging whether the identification is both a first device identification preset in a terminal for controlling the intelligent electric apparatus and a second device identification bound to the intelligent electric apparatus;
determining (S203) the smart wearable device is the default smart wearable device if a judgment result is positive; and
determining (S204) the smart wearable device is not the default smart wearable device if a judgment result is negative.

3. The method according to claim 2, wherein the identification of the smart wearable device comprises a hardware address of the smart wearable device or a unique name of the smart wearable device.

4. The method according to claim 1, 2 or 3, wherein the preset parameter comprises any one or more of the distance between the smart wearable device and the intelligent electric apparatus and a signal intensity of the message.

5. The method according to claim 4, wherein prior to controlling (S103, S406, S604) the operating mode of the intelligent electric apparatus in accordance with the preset parameter, the method further comprises any one or more of following operations of:
acquiring (S301) a location of the smart wearable device via a global position system (GPS) technology, and determining the distance between the smart wearable device and the intelligent electric apparatus in accordance with the location of the smart wearable device; or
determining (S302) the distance between the smart wearable device and the intelligent electric apparatus via an infrared detection technology; or
determining (S303, S405, S603) the signal intensity of the message in accordance with the message, and determining the distance between the smart wearable device and the intelligent electric apparatus in accordance with the signal intensity of the message.

6. The method according to claim 4, wherein if the preset parameter comprises the distance between the smart wearable device and the intelligent electric apparatus, controlling (S103, S406, S604) the operating mode of the intelligent electric apparatus in accordance with the preset parameter comprises:
turning on (S304) the intelligent electric apparatus if the distance is less than a first threshold or within a first predetermined range for a predetermined period; and/or
turning off (S305) the intelligent electric apparatus if the distance is greater than a second threshold or within a second predetermined range for the predetermined period,
wherein the first threshold is less than or equal to the second threshold, and a maximal value of the first predetermined range is less than or equal to a minimal value of the second predetermined range.

7. The method according to claim 4, wherein if the preset parameter comprises the signal intensity of the message, controlling (S103, S406, S604) the operating mode of the intelligent electric apparatus in accordance with the preset parameter comprises:
turning on (S306) the intelligent electric apparatus if the signal intensity is greater than a third threshold or within a third predetermined range for a predetermined period; and/or
turning off (S307) the intelligent electric apparatus if the signal intensity is less than a fourth threshold or within a fourth predetermined range for the predetermined period,
wherein the third threshold is greater than or equal to the fourth threshold, and a minimal value of the third predetermined range is greater than or equal to a maximal value of the fourth predetermined range.

8. The method according to claim 4, wherein controlling (S103, S406, S604) the operating mode of the intelligent electric apparatus in accordance with the preset parameter comprises:
determining (S401) an operating mode of the intelligent electric apparatus corresponding to the preset parameter in accordance with a preset correspondence between a predetermined parameter range and the operating mode of the intelligent electric apparatus; and
adjusting (S402) the operating mode of the intelligent electric apparatus to the operating mode of the intelligent electric apparatus corresponding to the preset parameter.

9. The method according to any preceding claim, further comprising:
adjusting (S407) the operating mode of the intelligent electric apparatus to a predetermined operating mode, if the message broadcast by the smart wearable device is not received in a predetermined period or there is a failure to judge whether the smart wearable device is the default smart wearable device in accordance with the message.

10. The method according to any one of claims 1 to 9, wherein if the intelligent electric apparatus is a smart air conditioner, the method further comprises:
acquiring (S605) a signal sending orientation of the message; and
controlling (S606) a swing direction of the smart air conditioner in accordance with the signal sending orientation of the message.

11. A working device of an intelligent electric apparatus, comprising:
a first acquiring module (71), configured to acquire a message broadcasted by a smart wearable device;
a judging module (72), configured to judge whether the smart wearable device is a default smart wearable device in accordance with the message; and
a first controlling module (73), configured to control an operating mode of the intelligent electric apparatus in accordance with a preset parameter if the smart wearable device is determined as the default smart wearable device, the preset parameter comprising a parameter reflecting a distance between the smart wearable device and the intelligent electric apparatus.

12. The device according to claim 11, wherein the judging module (72) comprises:
an acquiring sub-module (81), configured to acquire an identification of the smart wearable device from the message;
a judging sub-module (82), configured to judge whether the identification is a first device identification preset in a terminal for controlling the intelligent electric apparatus; or judge whether the identification is a second device identification bound to the intelligent electric apparatus; or judge whether the identification is both a first device identification preset in a terminal for controlling the intelligent electric apparatus and a second device identification bound to the intelligent electric apparatus;
a first determining sub-module (83), configured to determine the smart wearable device is the default smart wearable device if a judgment result is positive; and
a second determining sub-module (84), configured to determine the smart wearable device is not the default smart wearable device if the judgment result is negative.

13. The device according to claim 12, wherein the preset parameter comprises any one or more of the distance between the smart wearable device and the intelligent electric apparatus and a signal intensity of the message;
if the preset parameter comprises the distance between the smart wearable device and the intelligent electric apparatus, the first controlling module (73) comprises: a first turning on sub-module (101), configured to turn on the intelligent electric apparatus if the distance is less than a first threshold or within a first predetermined range for a predetermined period; and/or a first turning off sub-module (102), configured to turn off the intelligent electric apparatus if the distance is greater than a second threshold or within a second predetermined range for the predetermined period, wherein the first threshold is less than or equal to the second threshold, and a maximal value of the first predetermined range is less than or equal to a minimal value of the second predetermined range;
if the preset parameter comprises the signal intensity of the message, the first controlling module (73) comprises: a second turning on sub-module (111), configured to turn on the intelligent electric apparatus if the signal intensity is greater than a third threshold or within a third predetermined range for the predetermined period; and/or a second turning off sub-module (112), configured to turn off the intelligent electric apparatus if the signal intensity is less than a fourth threshold or within a fourth predetermined range for the predetermined period, wherein the third threshold is greater than or equal to the fourth threshold, and a minimal value of the third predetermined range is greater than or equal to a maximal value of the fourth predetermined range.

14. The device according to claim 11, wherein the first controlling module (73) comprises:
a third determining sub-module (121), configured to determine an operating mode of the intelligent electric apparatus corresponding to the preset parameter in accordance with a preset correspondence between a predetermined parameter range and the operating mode of the intelligent electric apparatus; and
an adjusting sub-module (122), configured to adjust the operating mode of the intelligent electric apparatus to the operating mode of the intelligent electric apparatus corresponding to the preset parameter.

15. The device according to claim 11, further comprising:
an adjusting module (79), configured to adjust the operating mode of the intelligent electric apparatus to a predetermined operating mode, if the message broadcasted by the smart wearable device is not received in a predetermined period or there is a failure to judge whether the smart wearable device is the default smart wearable device in accordance with the message.
